**Europäisches Patentamt**

**European Patent Office**

**Office européen des brevets**

(19)

(11) Veröffentlichungsnummer: **0 004 856**
**A1**

(12) **EUROPÄISCHE PATENTANMELDUNG**

(21) Anmeldenummer: **79100392.4**

(22) Anmeldetag: **12.02.79**

(51) Int. Cl.²: **H 04 L 25/50**
**//H04J3/06**

(30) Priorität: **18.04.78 CH 4124/78**

(43) Veröffentlichungstag der Anmeldung:
**31.10.79 Patentblatt 79/22**

(84) Benannte Vertragsstaaten:
**BE DE FR GB IT NL SE**

(71) Anmelder: **SIEMENS-ALBIS AKTIENGESELLSCHAFT**
**EGA1/Verträge und Patente Postfach**
**CH-8047 Zürich(CH)**

(72) Erfinder: **Eichin, Rolf, El.Ing.ETH**
**Zielweg 69**
**CH-8055 Zürich(CH)**

(54) **Verfahren zur synchronen Uebertragung von Datenströmen unterschiedlicher Bitrate sowie sende- und empfangsseitige Schaltungsanordnung zur Durchführung des Verfahrens.**

(57) Die Erfindung betrifft ein Verfahren zur synchronen Uebertragung wahlweise eines binären Datenstromes (DS) der Bitrate 2,4- oder 4,8- oder 9,6-kbit/s bzw. 19,2-kbit/s über einen 16- oder 32-kbit/s-Uebertragungsweg (UW), sowie die entsprechende sende- und empfangsseitige Schaltungsanordnung. Bei einer Datenstrombitrate von 9,6- bzw. 19,2-kbit/s und einer Uebertragungswegbitrate von 16-kbit/s bzw. 32-kbits/s wird als Synchronwort die Bitfolge $\bar{y}yyy$ gewählt, von jedem zu übertragenden Datenbit ein Abtastwert entnommen und nach jeweils zwei in den Uebertragungswegbitstrom eingeblendeten Abtastwerten ein Füllbit mit dem Binärwert $\bar{y}$ eingeblendet. Diese bezüglich des Synchronwortes stets an denselben Bitstellen erscheinenden Füllbit werden empfangsseitig unwirksam gemacht. Bei einer Datenbitrate von 2,4- oder 4,8- bzw. 2,4- oder 4,8- oder 9,6-kbit/s und einer Uebertragungswegbitrate von 16-kbit/s bzw. 32-kbit/s wird als Synchronwort die Bitfolge $\bar{y}yyy$ gewählt, von jedem zu übertragenden Datenbit entsprechend dem Verhältnis von Datenbitrate zu Uebertragungswegbitrate 12, 6 oder 3 Abtastwerte entnommen und empfangsseitig die Datenbit durch Mehrheitsentscheidung aus jeweils drei aufeinanderfolgenden Abtastwerten reproduziert.

EP 0 004 856 A1

./..

Croydon Printing Company Ltd.

Fig. 1

Verfahren zur synchronen Uebertragung von Datenströmen unterschiedlicher
Bitrate sowie sende- und empfangsseitige Schaltungsanordnung zur Durchführung des Verfahrens

Die vorliegende Erfindung betrifft ein Verfahren sowie die sende- und empfangsseitige Schaltungsanordnung zur synchronen Uebertragung wahlweise eines von mehreren binären Datenströmen mit sich jeweils um den Faktor zwei unterscheidenden Bitraten über einen Uebertragungsweg, dessen Bitrate zumindest angenähert um den Faktor $\frac{5}{3}$ grösser ist als die höchste zu übertragende Datenbitrate k, wobei auf dem Uebertragungsweg nach jeweils der Anzahl n Bit ein Synchronwort übertragen wird. Die der Erfindung zugrundeliegende Aufgabe besteht darin, ein Verfahren anzugeben, gemäss dem wahlweise einer von mehreren binären Datenströmen, deren Bitrate sich um den Faktor zwei unterscheidet, synchron über einen Uebertragungsweg geleitet werden kann, dessen Bitrate zumindest um angenähert den Faktor $\frac{5}{3}$ grösser ist als die höchste zu übertragende Datenbitrate. Die Lösung dieser Aufgabe erfolgt nach dem im Patentanspruch 1 definierten Verfahren mittels der in den Patentansprüchen 2 und 3 angegebenen sende- bzw. empfangsseitigen Schaltungsanordnungen.

Die Erfindung ermöglicht somit in vorteilhafter Weise mittels ein und derselben sendeseitigen Schaltungsanordnung wahlweise einen von mehreren Datenströmen, deren Bitrate sich um den Faktor zwei unterscheidet, synchron in den Bitstrom eines Uebertragungsweges einzublenden und solche Datenströme mittels ein und derselben empfangsseitigen Schaltungsanordnung aus dem Uebertragungswegbitstrom auszublenden.

Nachfolgend sei die Erfindung anhand der Zeichnungen beispielsweise näher erläutert. Dabei zeigen Fig. 1 die bitweise Uebernahme wahlweise eines Datenstromes der Bitrate 9,6-kbit/s; 4,8-kbit/s oder 2,4-kbit/s in den Bitstrom eines 16-kbit/s-Uebertragungsweges; Fig. 2 das Prinzipschaltbild einer sendeseitigen Schaltungsanordnung; Fig. 3 das Prinzipschaltbild einer empfangsseitigen Schaltungsanordnung sowie Fig. 4 und Fig. 5 Detailschaltungen.

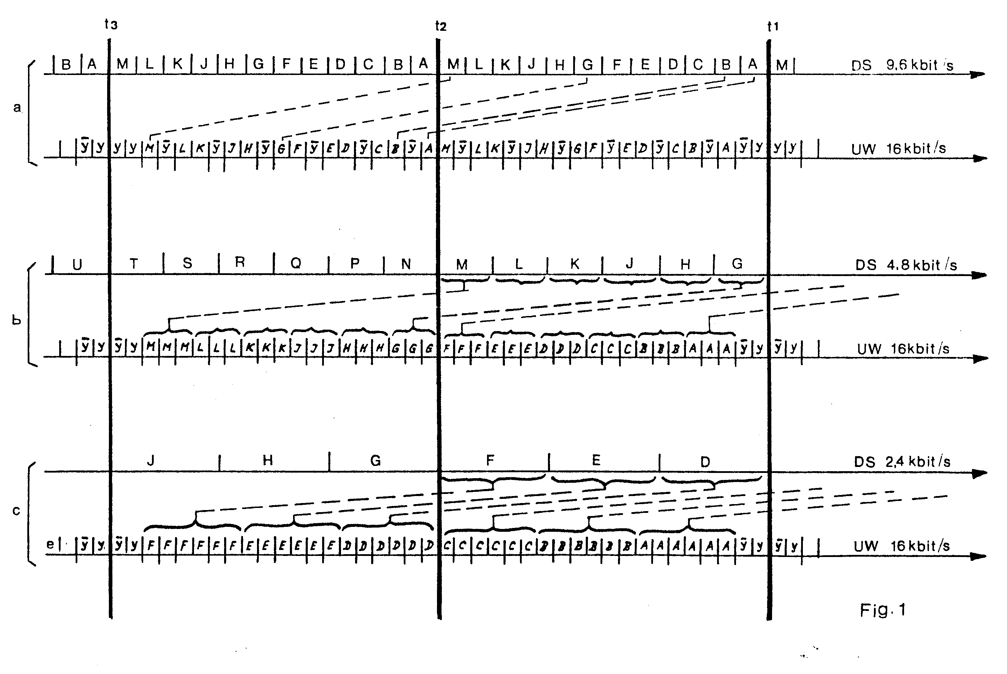

In Fig. 1 ist in den Zeilen a) das Einblenden eines 9,6-kbit/s-Datenstromes, in den Zeilen b) das Einblenden eines 4,8-kbit/s-Datenstromes und in den Zeilen c) das Einblenden eines 2,4-kbit/s-Datenstromes in jeweils einen 16-kbit/s-Uebertragungsweg dargestellt. Das kleinste ganzzahlige Verhältnis zwischen den 2,4-/4,8-/9,6-kbit/s-Datenströmen und dem 16-kbit/s-Uebertragungsweg beträgt 3 : 6 : 12 : 20. Dies bedeutet, dass jeweils entweder drei Bit eines 2,4-kbit/s-Datenstromes oder sechs Bit eines 4,8-kbit/s-Datenstromes oder zwölf Bit eines 9,6-kbit/s-Datenstromes in jeweils zwanzig Bit des 16-kbit/s-Uebertragungsweges einzublenden sind. Dies erfolgt in der Weise, dass im Falle eines 2,4-kbit/s-Datenstromes von jedem Datenbit sechs Abtastwerte übertragen, im Falle eines 4,8-kbit/s-Datenstromes von jedem Datenbit drei Abtastwerte übertragen und im Falle eines 9,6-kbit/s-Datenstromes von jedem Datenbit ein Abtastwert sowie zusätzliche sechs Füllbit übertragen und die auf dem Uebertragungsweg in einer 20-Bitfolge jeweils verbleibenden zwei Bit für das Synchronwort verwendet werden. Dadurch, dass nun abwechslungsweise die jeweils verbleibenden und für das Synchronwort reservierten zwei Bit an den Anfang bzw. an den Schluss dieser 20-Bitfolgen gelegt werden, ergibt sich die Möglichkeit, nach jeweils vierzig Bit ein aus vier Bit bestehendes Synchronwort in den Uebertragungsweg-Bitstrom einzublenden. Um nun dieses Synchronwort gegenüber den Bitfolgen der 2,4-kbit/s- oder 4,8-kbit/s- oder 9,6-kbit/s-Datenströme unterscheidbar zu machen, werden Massnahmen ergriffen, damit in den auf dem Uebertragungsweg übertragenen Datenstrom-Bitfolgen das Synchronwort kennzeichnende Bitfolgen überhaupt nicht auftreten können. Im Falle der Uebertragung eines 9,6-kbit/s-Datenstromes DS erfolgt dies dadurch, dass einerseits als Synchronwort eine Bitfolge gewählt wird, in der sich jeweils ein Bit der einen binären Wertigkeit und drei Bit der andern binären Wertigkeit oder umgekehrt folgen - also $\bar{y}yyy$ oder $yyy\bar{y}$ - und andererseits spätestens nach Uebernahme von jeweils zwei Datenbit ein Füllbit derjenigen binären Wertigkeit eingeblendet wird, von der im erwähnten Synchronwort lediglich ein Bit vorkommt. Im Falle der Uebertragung eines 2,4-kbit/s- oder 4,8-kbit/s-Datenstromes DS wird dies durch ein Synchronwort der Bitfolge $\bar{y}y\bar{y}y$ erreicht. Durch diese Massnahmen ist sichergestellt, dass die als Synchronwort gewählte jeweilige Bitfolge ansonst nicht auftreten kann und das Synchronwort selbst dadurch empfangsseitig jederzeit eindeutig identifizierbar ist. Bei der Uebertragung eines 9,6-kbit/s-Datenstromes werden die an jeweils stets denselben Bitstellen bezüglich des Synchronwortes auftretenden Füllbit empfangsseitig ausgeblendet und die verbleibenden Bit an den jeweiligen Datenempfänger weitergeleitet. Bei der Uebertragung eines 4,8-kbit/s- oder 2,4-kbit/s-Datenstromes wird aus jeder Gruppe von einem einzelnen Datenbit entnommenen Abtastwerten durch Mehrheitsentscheidung das an den jeweiligen Datenempfänger weiterzuleitende Bit gewonnen. Selbstverständlich kann dieses Uebertragungsverfahren auch dann angewendet werden, wenn als Uebertragungsweg eine Bitrate von 32-kbit/s gewählt wird. In diesem Falle werden von jedem einzelnen Datenbit eines 2,4-kbit/s-Datenstromes zwölf Abtastwerte bzw. von jedem Datenbit eines 4,8-kbit/s-Datenstromes sechs Abtastwerte übertragen bzw. von jedem Datenbit eines 9,6-kbit/s-Datenstromes drei Abtastwerte übertragen. Im Falle eines 32-kbit/s-Uebertragungsweges kann selbstverständlich ebenfalls ein 19,2-kbit/s-Datenstrom auf dieselbe Weise und unter Verwendung desselben Synchronwortes übertragen werden, wie dies bei der Uebertragung eines 9,6-kbit/s-Datenstromes über einen 16-kbit/s-Uebertragungsweg erfolgt. Ferner ist es durchaus denkbar, dass auch eine andere Uebertragungsweg-Bitrate gewählt werden kann. Eine Anpassung kann in solchen Fällen dadurch erfolgen, indem die Anzahl der je Synchronwort verwendeten Bit erhöht wird. So kann im Falle von Sechs-Bit-Synchronworten ein 2,4-/ 4,8- oder 9,6-kbit/s-Datenstrom nach dem gleichen Verfahren über einen 16,8-kbit/s-Uebertragungsweg übertragen werden. Die Taktfrequenzen der sendeseitig in den Uebertragungsweg einzublendenden wie auch der empfangsseitig aus dem Uebertragungsweg auszublendenden Datenströme können selbstverständlich von einem gemeinsamen Taktgenerator abgeleitet werden. Im Falle eines 16-kbit/s-Uebertragungsweges wird beispielsweise ein Takt von 96 kHz erzeugt und hievon die Taktfrequenzen 32 kHz, 16 kHz, 9,6 kHz, 4,8 kHz, 2,4 kHz durch Teilung abgeleitet.

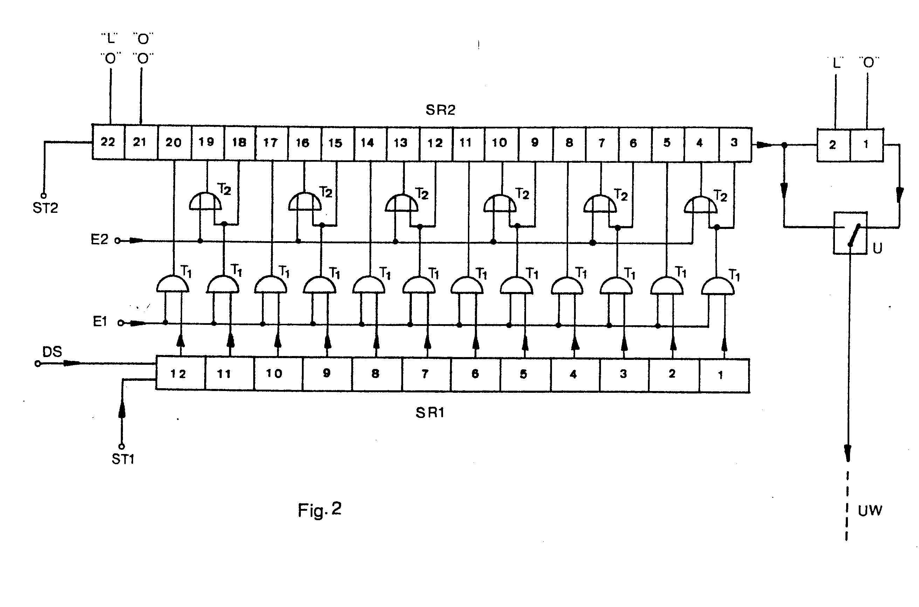

In Fig. 2 ist das Prinzipschaltbild einer sendeseitigen Schaltungsanordnung dargestellt, mit der wahlweise Datenströme DS mit der Bitrate 2,4-kbit/s, 4,8-kbit/s oder 9,6-kbit/s in einen 16-kbit/s-Uebertragungsweg UW eingeblendet werden können. Diese Schaltungsanordnung weist ein als Serie/Parallel-Wandler arbeitendes Schieberegister SR1 auf, an dessen seriellen Eingang der jeweilige zu übertragende Datenstrom DS geführt ist und dessen zwölf Parallelausgänge über ausgangsindividuelle Schalter T1 mit achtzehn Paralleleingängen eines als Parallel/Serie-Wandler arbeitenden Senderegisters SR2 verbunden sind, und zwar in der Weise, dass jeweils gruppenweise zwei aufeinanderfolgende Parallelausgänge des Schieberegisters SR1 mit drei Paralleleingängen des Senderegisters SR2 verbunden sind. Die als Schalter T1 verwendeten UND-Tore werden über den gemeinsamen Eingang E1 angesteuert, und zwar derart, dass periodisch jeweils der gesamte Inhalt des Schieberegisters SR1 gleichzeitig parallel dem Senderegister SR2 angeboten wird. Jeder erste Ausgang einer Zweiergruppe von Parallelausgängen des Schieberegisters SR1 ist mit dem jeweiligen ersten Eingang einer Dreiergruppe von Paralleleingängen des Senderegisters SR2 verbunden. Jeder zweite Ausgang einer Zweiergruppe von Parallelausgängen des Schieberegisters SR1 ist einerseits mit dem einen Eingang eines gruppenindividuellen ODER-Tores T2 und andererseits mit dem dritten Eingang der betreffenden Dreiergruppe von Paralleleingängen des Senderegisters SR2 fest verbunden. Der Ausgang jedes gruppenindividuellen ODER-Tores T2 ist mit dem zweiten Eingang der betreffenden Dreiergruppe von Paralleleingängen des Senderegisters SR2 fest verbunden. Die zweiten Eingänge aller ODER-Tore T2 sind miteinander verbunden und werden über den gemeinsamen Anschluss E2 entweder im Falle der Uebertragung eines 9,6-kbit/s-Datenstromes DS mit dem binären Wert "L" oder im Falle der Uebertragung eines 4,8- oder 2,4-kbit/s-Datenstromes DS mit dem binären Wert "0" angesteuert. Von dem sendeseitig zu übernehmenden Datenstrom DS werden im 9,6-kbit/s-Takt entnommene Abtastproben dem seriellen Eingang des Schieberegisters SR1 zugeführt und in demselben durch den 9,6-kbit/s-Schiebetakt ST1 weiterverschoben. Dies bedeutet, dass von jedem einzelnen Bit eines 2,4-kbit/s-Datenstromes jeweils vier Abtastwerte, von jedem einzelnen Bit eines 4,8-kbit/s-Datenstromes jeweils zwei Abtastwerte und von jedem einzelnen Bit eines 9,6-kbit/s-Datenstromes jeweils lediglich ein einziger Abtastwert übernommen und in das Schieberegister SR1 eingelesen werden. Bei der Uebertragung eines 2,4-kbit/s-Datenstromes werden somit im Schieberegister SR1 Pakete von je vier Abtastwerten, die jeweils zusammen ein Bit des 2,4-kbit/s-Datenstromes repräsentieren, im 9,6-kbit/s-Schiebetakt ST1 verschoben. Bei der Uebertragung eines 4,8-kbit/s-Datenstromes sind dies zwei Abtastwerte pro Paket und bei der Uebertragung eines 9,6-kbit/s-Datenstromes ein einzelner Abtastwert pro Paket. Sobald das Schieberegister SR1 jeweils zwölf der durch den 9,6-kbit/s-Schiebetakt ST1 fortlaufend weiterverschobenen Abtastwerte aufgenommen hat, werden diese über die nun geschlossenen Schalter T1 gleichzeitig parallel vom Senderegister SR2 übernommen und in demselben durch den 16-kbit/s-Schiebetakt ST2, der mit dem Uebertragungsweg-Bittakt übereinstimmt, an den Serieausgang des Senderegisters SR2 weiterverschoben und auf den Uebertragungsweg UW geleitet. Die Uebernahme der Abtastwerte von den Parallelausgängen des Schieberegisters SR1 durch die Paralleleingänge des Senderegisters SR2 erfolgt jeweils in der Art, dass gruppenweise der an jedem ersten Parallelausgang des Schieberegisters SR1 anstehende Binärwert unverändert vom jeweiligen ersten Paralleleingang des Senderegisters SR2 und der an jedem zweiten Parallelausgang des Schieberegisters SR1 anstehende Binärwert unverändert vom jeweiligen dritten Paralleleingang des Senderegisters SR2 übernommen wird. Zusätzlich wird nun gruppenweise der an jedem zweiten Parallelausgang des Schieberegisters SR1 anstehende Binärwert über die zugeordneten ODER-Tore T2 den jeweiligen zweiten Paralleleingängen des Senderegisters SR2 angeboten und in Abhängigkeit von der Ansteuerung der ODER-Tore T2 über den gemeinsamen Anschluss E1 entweder übernommen oder es wird derjenige Binärwert, mit dem die ODER-Tore T2 gemeinsam angesteuert werden, übernommen. Da bei Uebernahme eines Datenstromes DS mit der Bitrate 9,6-kbit/s die miteinander verbundenen Eingänge sämtlicher ODER-Tore T2 gemeinsam mit dem Binärwert "L" angesteuert werden, wird in den auf den Uebertragungsweg UW abgehenden Bitstrom nach jedem zweiten aus dem Schieberegister SR1 übernommenen Bit ein Füllbit mit dem Binärwert "L" eingeblendet. Soll anstelle des in diesem Falle verwendeten Synchronwortes L000 das invertierte Synchronwort 0LLL verwendet werden, so ändert sich selbstverständlich die Detailschaltung dieser ODER-Verknüpfung in dem Sinne, dass anstelle der gruppenindividuellen ODER-Tore T2 dann gruppenindividuelle UND-Tore verwendet werden, deren gemeinsame Ansteuerung bei der Uebertragung eines 9,6-kbit/s-Datenstromes mit dem binären Wert "0" und bei 4,8- oder 2,4-kbit/s-Datenströmen mit dem binären Wert "L" angesteuert wird. Im letzteren Falle würde dann wiederum bei Uebernahme eines 9,6-kbit/s-Datenstromes nach jedem zweiten vom Schieberegister SR1 übernommenen Bit ein Füllbit der Wertigkeit "0" eingeblendet.

Für das Einblenden der beiden je zwei Bit aufweisenden Synchronworthälften sind an den beiden Enden des Senderegisters SR2 je zwei zusätzliche Speicherzellen 1, 2, 21, 22 vorhanden. Wie Fig. 2 zeigt, weist das Senderegister SR2 eigentlich zwei serielle Ausgänge auf, die beide über einen gemeinsamen Umschalter U mit dem Uebertragungsweg UW verbunden sind. Zwischen diesen beiden Ausgängen befinden sich zwei der bereits erwähnten Speicherzellen 1, 2, in denen jeweils ein Synchronhalbwort gespeichert wird. Wie bereits erwähnt, wird auf dem Uebertragungsweg UW nach einer Folge von jeweils vierzig Bit ein aus vier Bit bestehendes Synchronwort in der Art übertragen, dass abwechslungsweise am Anfang bzw. am Ende einer 20-Bitfolge jeweils ein Synchronhalbwort übertragen wird. Dieses Vorgehen ermöglicht die in Fig. 2 gezeigte reduzierte Schaltungsanordnung, indem ein Schieberegister SR1 mit lediglich zwölf Speicherzellen und ein Senderegister SR2 mit zwanzig plus zwei Speicherzellen verwendet wird, wobei mittels des Umschalters U abwechselnd 20-Bitfolgen aus den Speicherzellen 1 bis 20 bzw. 3 bis 22 des Senderegisters SR2 ausgelesen werden. Der Umschalter U wird nach jeweils zwanzig Bit von der einen Lage in die andere Lage gebracht, was beispielsweise mittels eines Bitzählers erfolgen kann. Die Speicherzellen 1, 2 und 21, 22 des Senderegisters SR2 werden über deren Paralleleingänge periodisch mit Synchronhalbworten geladen.

Die Funktionsweise der in Fig. 2 dargestellten Schaltungsanordnung sei nun anhand der in Fig. 1 dargestellten Diagramme nachfolgend kurz erläutert. Zu jedem der in Fig. 1 dargestellten Zeitpunkte t1, t2, t3 etc. beginnt jeweils eine neue 20-Bitfolge auf dem Uebertragungsweg UW. Während einer solchen 20-Bitfolge werden jeweils zwölf Abtastwerte aus dem zu übernehmenden Datenstrom entnommen und in das Schieberegister SR1 seriell eingelesen und in demselben mittels des 9,6-kbit/s-Schiebetaktes ST1 verschoben. Am Ende jeder 20-Bitfolge, also zu jedem Zeitpunkt t wird jeweils ein Uebernahmesignal an den Eingang E1 der Schalter T1 gelegt und dadurch der gesamte Inhalt des Schieberegisters SR1 gleichzeitig parallel dem Senderegister SR2 angeboten. Wie bereits erwähnt, werden diese zwölf vom Schieberegister SR1 abgegebenen Werte in achtzehn Speicherzellen 3...20 des Senderegisters SR2 eingelesen. Das Auslesen dieser im Senderegister SR2 gespeicherten Abtastwerte erfolgt dann während der jeweils nächstfolgenden 20-Bitfolge. Während der vom Zeitpunkt t1 bis zum Zeitpunkt t2 dauernden 20-Bitfolge nimmt der Umschalter U die in Fig. 2 dargestellte Lage ein, wodurch das in den Speicherzellen 1, 2 des Senderegisters SR2 gespeicherte Synchronhalbwort und anschliessend die in den Speicherzellen 3 bis 20 gespeicherten Abtastwerte übernommen und seriell auf den Uebertragungsweg UW gegeben werden. Das ursprünglich in den Speicherzellen 21 und 22 des Senderegisters SR2 gespeicherte Synchronhalbwort ist nach der Entnahme der zwanzig Bit in den Speicherzellen 1, 2 des Senderegisters SR2 angelangt. Zu diesem Zeitpunkt t2 wird nun einerseits der Umschalter U umgesteuert und andererseits wird an den gemein-

samen Eingang E1 aller Schalter T1 ein Uebernahmesignal angelegt und dadurch die während der vorangehenden 20-Bitfolge dem zu übertragenden Datenstrom DS entnommenen und in das Schieberegister SR1 aufgenommenen weiteren zwölf Abtastwerte gleichzeitig parallel dem Senderegister SR2 angeboten. Zum selben Zeitpunkt t2 beginnt die serielle Ausgabe der in den Speicherzellen 3 bis 22 des Senderegisters SR2 gespeicherten Abtastwerte über den Umschalter U auf den Uebertragungsweg UW, wobei die letzten zwei Bit dieser 20-Bitfolge wiederum ein Synchronhalbwort bilden. Zu dem nun folgenden Zeitpunkt t3 wird einerseits erneut der Umschalter U umgesteuert und andererseits ein Uebernahmesignal an den allen Schaltern T1 gemeinsamen Eingang E1 gelegt, so dass wiederum die während der vorangehenden 20-Bitfolge dem zu übertragenden Datenstrom DS entnommenen Abtastwerte gleichzeitig parallel dem Senderegister SR2 angeboten werden. Gleichzeitig beginnt nun wiederum die serielle Ausgabe der in den Speicherzellen 1 bis 20 des Senderegisters SR2 gespeicherten Abtastwerte über den Umschalter U auf den Uebertragungsweg UW, wobei gleich zu Beginn dieser 20-Bitfolge das in den Speicherzellen 1, 2 inzwischen erneut eingespeicherte nächste Synchronhalbwort übernommen wird.

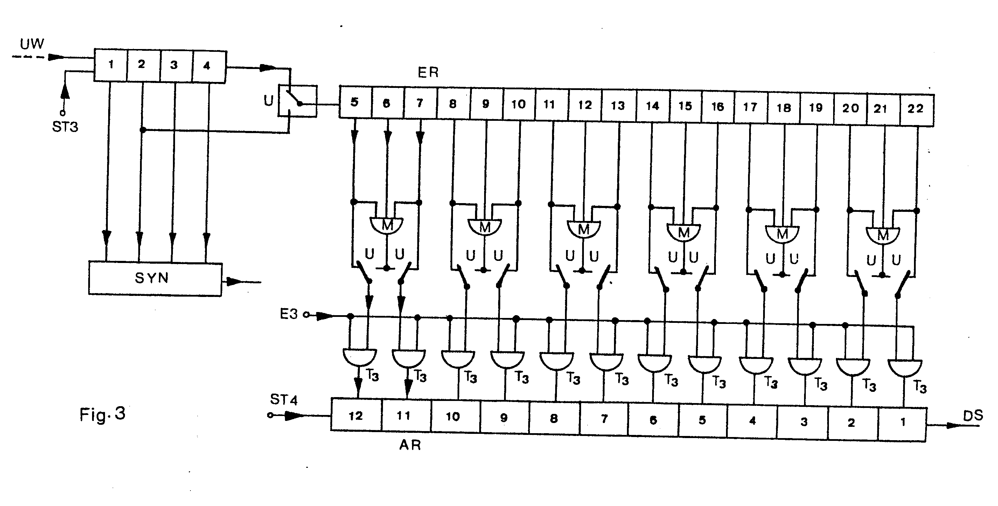

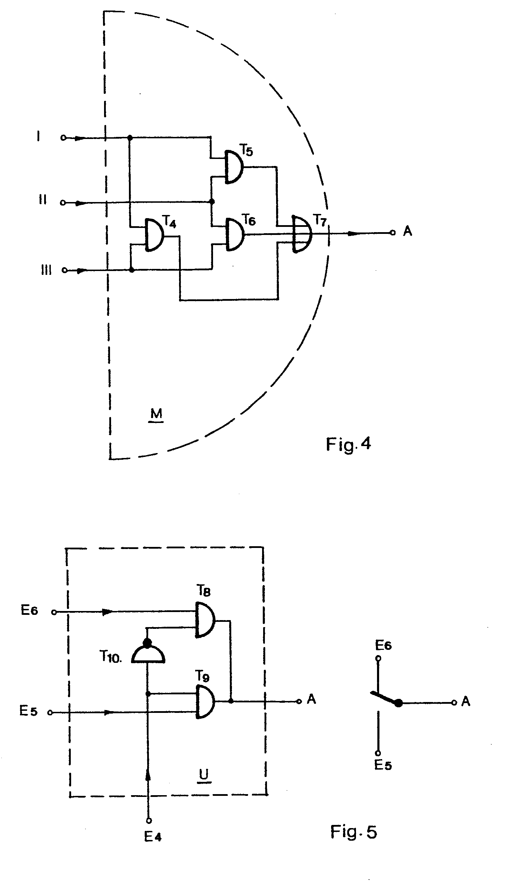

In Fig. 3 ist das Prinzipschaltbild einer empfangsseitigen Schaltungsanordnung dargestellt, mit der wahlweise Datenströme DS mit der Bitrate 2,4-kbit/s; 4,8-kbit/s oder 9,6-kbit/s aus einem 16-kbit/s-Uebertragungsweg UW ausgeblendet werden können. Diese Schaltungsanordnung weist ein als Serie/Parallel-Wandler arbeitendes Empfangsregister ER auf, dessen serieller Eingang mit dem Uebertragungsweg UW verbunden ist und dessen Parallelausgänge mit den Paralleleingängen eines als Parallel/Serie-Wandler arbeitenden Ausgaberegisters AR verbunden sind, und zwar derart, dass gruppenweise jeweils drei aufeinanderfolgende Parallelausgänge des Empfangsregisters ER über eingangsindividuelle Schalter T3 mit jeweils zwei Paralleleingängen des Ausgaberegisters AR fest verbunden sind. Jede Dreiergruppe von Parallelausgängen des Empfangsregisters ER ist mit den drei Eingängen einer gruppenindividuellen Majoritätslogik M verbunden. Jeder Eingang einer Zweiergruppe von Paralleleingängen des Ausgaberegisters AR ist über je einen individuellen Schalter T3 und einen nachfolgenden Umschalter U entweder mit dem ersten bzw. dritten Ausgang der zugeordneten Dreiergruppe von Parallelausgängen des Empfangsregisters ER oder mit dem Ausgang der gruppenindividuellen Majoritätslogik M verbunden. Sämtliche Umschalter U werden in Abhängigkeit von der Bitrate des zu übertragenden Datenstromes DS gemeinsam gesteuert, und zwar in der Weise, dass für die Uebertragung eines 9,6-kbit/s-Datenstromes lediglich der erste und dritte Ausgang jeder Dreiergruppe von Parallelausgängen des Empfangsregisters ER mit dem ersten bzw. zweiten Eingang der zugeordneten Zweiergruppe von Paralleleingängen des Ausgaberegisters AR verbunden ist, und dass für die Uebertragung eines 2,4- oder 4,8-kbit/s-Datenstromes lediglich der Ausgang jeder gruppenindividuellen Majoritätslogik M sowohl mit dem ersten als auch dem zweiten Eingang der zugeordneten Zweiergruppe von Paralleleingängen des Ausgaberegisters AR verbunden ist. Diese Umschaltung hat somit zur Folge, dass bei der Uebertragung eines 9,6-kbit/s-Datenstromes nur die Abtastwerte der übertragenen Datenbit, nicht aber die Füllbit vom Empfangsregister ER ins Ausgaberegister AR übernommen, und dass bei der Uebertragung eines 2,4- oder 4,8-kbit/s-Datenstromes von jeder Dreiergruppe von auf dem Uebertragungsweg übermittelten Abtastwerten durch Mehrheitsentscheidung in der Majoritätslogik M lediglich ein einzelnes Bit gewonnen und dieses parallel und somit gleichzeitig an die beiden Eingänge der zugeordneten Zweiergruppe von Paralleleingängen des Ausgaberegisters AR weitergegeben werden. Die dem Ausgaberegister AR zugeführten Bit werden in demselben durch den 9,6-kbit/s-Schiebetakt ST4 verschoben und gelangen über dessen seriellen Ausgang als Datenstrom DS an den betreffenden, in Fig. 4 jedoch nicht dargestellten Datenempfänger.

Zum Feststellen der im Bitstrom des Uebertragungsweges UW eintreffenden 4-Bit Synchronworte sind am seriellen Eingang des Empfangsregisters ER vier weitere Speicherzellen 1 bis 4 vorhanden. Der serielle Ausgang der Speicherzelle 4 ist über einen Umschalter U mit dem seriellen Eingang der Speicherzelle 5 des Empfangsregisters ER und die Parallelausgänge der Speicherzellen 1 bis 4 sind mit einem Synchronwortdetektor SYN verbunden. Zusätzlich ist der Parallelausgang der Speicherzelle 2 des Empfangsregisters ER mit dem zwischen Speicherzelle 4 und Speicherzelle 5 angeordneten Umschalter U verbunden.

Die Funktionsweise der in Fig. 3 dargestellten Schaltungsanordnung sei nun anhand der in Fig. 1 dargestellten Diagramme nachfolgend kurz erläutert. Die vom Uebertragungsweg UW eintreffenden Bit gelangen an den seriellen Eingang des Empfangsregisters ER und werden in demselben durch den 16-kbit/s-Schiebetakt ST3 von einer Speicherzelle zur anderen verschoben. Sobald nun im Empfangsregister ER in den vier Speicherzellen 1 bis 4 ein vollständiges Synchronwort und in den achtzehn Speicherzellen 5 bis 22 die dem Synchronwort vorangegangenen achtzehn Abtastwerte derselben 20-Bitfolge eingespeichert sind, erkennt der Synchronwortdetektor SYN das angebotene Synchronwort und gibt einen entsprechenden Synchronisierimpuls ab, wobei gleichzeitig der zwischen den Speicherzellen 4 und 5 des Empfangsregisters ER befindliche Umschalter U den Parallelausgang der Speicherzelle 2 mit dem Eingang der Speicherzelle 5 verbindet.

Die dem soeben erkannten Synchronwort folgende 20-Bitfolge gelangt wiederum in die Speicherzellen 1 bis 4 des Empfangsregisters ER, wobei während dieser 20-Bitfolge die Ausgangswerte der Speicherzelle 2 direkt den Speicherzellen 5 bis 22 angeboten werden. Zwanzig Bit nach dem Erkennen eines vollständigen Synchronwortes befinden sich somit in den Speicherzellen 1 und 2 die beiden ersten Bit der nächstfolgenden 20-Bitfolge und in den Speicherzellen 5 bis 22 des Empfangsregisters ER die achtzehn auf das letztempfangene Synchronwort folgenden Abtastwerte. Zu diesem Zeitpunkt wird der zwischen Speicherzelle 4 und 5 des Empfangsregisters ER befindliche Umschaltekontakt umgesteuert, wobei dieser wiederum die in Fig. 3 dargestellte Lage einnimmt, so dass die nächste 20-Bitfolge nun wieder über die Speicherzellen 1 bis 4 in die Speicherzellen 5 bis 22 des Empfangsregisters ER gelangen kann. Nach jeder empfangenen 20-Bitfolge wird nebst dem Umschalten des zwischen den Speicherzellen 4 und 5 des Empfangsregisters ER befindlichen Umschalters U zudem ein Steuersignal an den Steuereingang E3 der Schalter T3 gelegt und dadurch die von den achtzehn Parallelausgängen des Empfangsregisters ER angebotenen Abtastwerte gleichzeitig den zwölf Paralleleingängen des Ausgaberegisters AR angeboten und von diesem übernommen und durch den 9,6-kbit/s-Schiebetakt ST4 an dessen seriellen Ausgang verschoben und an den anzusteuernden Datenempfänger weitergeleitet. Unabhängig davon, ob nun die Bitrate des zu übertragenden Datenstromes DS 2,4-; 4,8- oder 9,6-kbit/s beträgt, werden die Abtastwerte im Ausgaberegister AR durch den 9,6-kbit/s-Schiebetakt ST4 verschoben. Im Falle der Uebertragung eines 4,8-kbit/s-Datenstromes DS gibt der serielle Ausgang des Ausgaberegisters AR somit jeweils zwei Abtastwerte von jedem zu übertragenden Datenbit und im Falle der Uebertragung eines 2,4-kbit/s-Datenstromes DS vier Abtastwerte von jedem zu übertragenden Datenbit ab, wobei allerdings vom entsprechenden Datenempfänger dann jeweils nur ein Abtastwert übernommen wird.

Eine weitere Reduktion der in Fig. 3 dargestellten Schaltungsanordnung lässt sich dadurch erzielen, indem anstelle des zwischen den Speicherzellen 4 und 5 des Empfangsregisters ER vorgesehenen einfachen Umschalters U ein Mehrfachumschalter eingesetzt wird, wobei dann der serielle Eingang der Speicherzelle 5 des Empfangsregisters ER jeweils nach Aufnahme von zehn Bit zyklisch mit einem Ausgang nach dem anderen der Speicherzellen 1 bis 4 des Empfangsregisters ER verbunden wird. Durch diese Massnahme lässt sich das Empfangsregister ER auf vier plus neun Speicherzellen und das Ausgaberegister AR auf sechs Speicherzellen reduzieren, wobei sich gleichzeitig die Anzahl der zwischen Empfangsregister ER und Ausgaberegister AR erforderlichen Majoritätslogikschaltungen M, Umschalter U und Schalter T3 um die Hälfte reduzieren lässt.

Die Prinzipschaltung der in der empfangsseitigen Schaltungsanordnung verwendeten Majoritätslogik M ist in Fig. 4 dargestellt. Die drei Eingänge I, II und III der Majoritätslogik M sind mit den Eingängen dreier UND-Tore T4, T5 und T6 verbunden, und zwar in der Art, dass jeder einzelne Eingang der Majoritätslogik M mit je einem Eingang von zwei UND-Toren verbunden ist, wobei der jeweils andere Eingang eines solchen UND-Tores mit einem weiteren Eingang der Majoritätslogik M verbunden ist. Die Ausgänge dieser drei UND-Tore T4, T5 und T6 sind über ein ODER-Tor 17 verknüpft und bilden so den Ausgang A der Majoritätslogik M. Dieser Ausgang A gibt immer dann ein Signal ab, wenn an mindestens zwei der Eingänge I, II und III der Majoritätslogik M ein Signal angelegt wird.

Die Prinzipschaltung der sowohl in der sendeseitigen als auch in der empfangsseitigen Schaltungsanordnung verwendeten Umschalter ist in Fig. 5 dargestellt. Jeder der beiden Eingänge E5, E6 ist mit je einem Eingang eines UND-Tores T8, T9 verbunden. Der Steuereingang E4 des Umschalters U ist einerseits mit dem zweiten Eingang des UND-Tores T9 und andererseits über ein Negationsglied T10 mit dem zweiten Eingang des UND-Tores T8 verbunden. Die Ausgänge der beiden UND-Tore T8, T9 bilden miteinander verbunden den Ausgang A des Umschalters U. Je nach Ansteuerung des Steuereinganges E4 wird nun entweder das am Eingang E6 anliegende Signal oder aber das am Eingang E5 anliegende Signal zum gemeinsamen Ausgang A durchgeschaltet.

17.4.1978
78/9806 EGA1/Nr

Patentansprüche

1. Verfahren zur synchronen Uebertragung wahlweise eines von mehreren binären Datenströmen mit sich jeweils um den Faktor zwei unterscheidenden Bitraten über einen Uebertragungsweg, dessen Bitrate zumindest um angenähert den Faktor $\frac{5}{3}$ grösser ist als die höchste zu übertragende Datenbitrate k, wobei auf dem Uebertragungsweg nach jeweils der Anzahl n Bit ein Synchronwort übertragen wird, dadurch gekennzeichnet, dass bei der Uebertragung eines Datenstromes (DS) mit der höchsten zu übertragenden Bitrate als Synchronwort mindestens z aufeinanderfolgende Bit derselben binären Wertigkeit Y übertragen werden, und dass spätestens nach jeder Uebernahme und Weitergabe von jeweils der Anzahl z-1 Abtastwerte an den Uebertragungsweg (UW) ein Füllbit der Wertigkeit Y-invertiert ($\bar{Y}$) eingeblendet wird, dass ferner bei der Uebertragung eines Datenstromes, dessen Bitrate um den Faktor k = 2, k = 4 oder k = 8, etc. kleiner ist als die höchste zu übertragende Datenstrom-Bitrate, als Synchronwort mindestens z aufeinanderfolgende Bit von bitweise unterschiedlicher binärer Wertigkeit übertragen werden, und dass von jedem einzelnen Datenbit 1,5•k Abtastwerte entnommen und auf den Uebertragungsweg weitergegeben werden.

2. Sendeseitige Schaltungsanordnung zur Durchführung des Verfahrens nach Patentanspruch 1, dadurch gekennzeichnet, dass ein Schieberegister (SR1) vorhanden ist, an dessen seriellen Eingang der zu übertragende binäre Datenstrom (DS) geführt ist und von dessen Parallelausgängen gruppenweise jeweils zwei aufeinanderfolgende Parallelausgänge über ausgangsindividuelle Schalter (T1) mit jeweils drei aufeinanderfolgenden Paralleleingängen eines Senderegisters (SR2) fest verbunden sind, wobei gruppenweise jeder erste Parallelausgang mit dem gruppenweise zugeordneten ersten Paralleleingang und jeder zweite Parallelausgang einerseits mit einem ersten Eingang einer gruppenindividuellen Torschaltung (T2) und andererseits mit dem gruppenweise zugeordneten dritten Paralleleingang des Senderegisters (SR2) und jeder von dessen gruppenweise zugeordneten zweiten Paralleleingängen mit dem Ausgang der gruppenindividuellen Torschaltung (T2) verbunden ist, und dass an alle zweiten Eingänge (E2) der gruppenindividuellen Torschaltungen (T2) in Abhängigkeit der Bitrate des zu übertragenden Datenstromes (DS) entweder der binäre Wert "0" oder der binäre Wert "L" angelegt und der serielle Ausgang des Senderegisters (SR2) mit dem Uebertragungsweg (UW) verbunden ist.

3. Empfangsseitige Schaltungsanordnung zur Durchführung des Verfahrens nach Patentanspruch 1, dadurch gekennzeichnet, dass ein Empfangsregister (ER) vorhanden ist, dessen serieller Eingang mit dem Uebertragungsweg (UW) verbunden ist und von dessen Parallelausgängen gruppenweise jeweils drei aufeinanderfolgende Parallelausgänge mit den Eingängen einer gruppenindividuellen Majoritätslogik (M) verbunden sind, und dass ein Ausgaberegister (AR) vorhanden ist, dessen seriellem Ausgang der übertragene binäre Datenstrom (DS) entnehmbar ist und von dessen Paralleleingängen gruppenweise jeweils zwei aufeinanderfolgende Paralleleingänge über je einen eingangsindividuellen Schalter (T3) und je einen Umschalter (U) in Abhängigkeit der Bitrate des zu übertragenden Datenstromes (DS) entweder individuell mit den gruppenweise ersten und dritten Parallelausgängen des Empfangsregisters (ER) oder gemeinsam mit dem Ausgang der gruppenindividuellen Majoritätslogik (M) verbunden sind.

17.4.1978
78/9806 EGA1/Nr

a

t3    t2    t1

| B | A | | M | L | K | J | H | G | F | E | D | C | B | A | | M | L | K | J | H | G | F | E | D | C | B | A | | M | | DS 9,6 kbit/s

| ȳ | y | y | y | M | ȳ | L | K | ȳ | J | H | ȳ | G | F | ȳ | E | D | ȳ | C | B | ȳ | A | M | ȳ | L | K | ȳ | J | H | ȳ | G | F | ȳ | E | D | ȳ | C | B | ȳ | A | ȳ | y | y | y | | UW 16 kbit/s

b

| U | | T | | S | | R | | Q | | P | | N | | M | | L | | K | | J | | H | | G | | DS 4,8 kbit/s

| ȳ | y | ȳ | y | M | M | M | L | L | L | K | K | K | J | J | J | H | H | H | G | G | G | F | F | F | E | E | E | D | D | C | C | C | B | B | B | A | A | A | ȳ | y | ȳ | y | | UW 16 kbit/s

c

| J | | H | | G | | F | | E | | D | | DS 2,4 kbit/s

e | ȳ | y | ȳ | y | F | F | F | F | F | F | E | E | E | E | E | D | D | D | D | D | D | C | C | C | C | C | C | B | B | B | B | B | B | A | A | A | A | A | A | ȳ | y | ȳ | y | | UW 16 kbit/s

Fig. 1

0004856

Fig. 2

Fig. 3

I

II

III

T5

T4

T6

T7

A

M

Fig. 4

E6

T8

T10.

E5

T9

A

U

E4

E6

A

E5

Fig. 5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IBM TECHNICAL DISCLOSURE BULLETIN, Vol. 16, Nr. 11, April 1974, New York, A. POULET: "Interface between two transmission lines having different transmission speeds", Seiten 3618-3620 <br><br> * Seite 3618, Zeile 2 bis Seite 3619, Zeile 8; Seite 3619, Zeilen 37-43 * <br><br> -- | 1-3 |
| | US - A - 3 636 524 (HOLLAND) <br> * Spalte 3, Zeilen 34-72 * <br><br> -- | 1-3 |
| | US - A - 3 652 802 (SCHELLENBERG) <br> * Spalte 5, Zeilen 30-62; Spalte 6, Zeilen 8-20,25-75; Spalte 7, Zeilen 55-65 * <br><br> -- | 1-3 |
| | US - A - 3 796 991 (STENSTROM) <br> * Spalte 1, Zeile 1 bis Spalte 2, Zeile 9 * <br><br> ---- | 1-3 |

**KLASSIFIKATION DER ANMELDUNG (Int.Cl.²)**

H 04 L 25/50//
H 04 J 3/06

**RECHERCHIERTE SACHGEBIETE (Int. Cl.²)**

H 04 L 25/36
25/50
25/38
25/45
7/04
7/08
5/22
5/24
H 04 J 3/06
3/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-06-1979 | GEISLER |

EPA form 1503.1 06.78